# EUROPEAN PATENT APPLICATION

(11) **EP 3 104 319 A1**
(43) Date of publication of application: **14.12.2016**
(21) Application number: 16159097.1
(22) Date of filing: 08.03.2016
(51) Int. Cl.: G06Q 10/10, G06Q 20/20, G06Q 30/06

(54) **SALES INFORMATION PROCESSING DEVICE AND STORAGE MEDIUM**

(30) Priority: 08.06.2015 JP 2015115511
(71) Applicant: CASIO COMPUTER CO., LTD., Shibuya-ku, Tokyo 151-8543 (JP)
(72) Inventor: ITAKURA, Katsuyuki, Hamura-shi, Tokyo 205-8555 (JP)
(74) Representative: Grünecker Patent- und Rechtsanwälte PartG mbB

(57) **Abstract**

A sales information processing device includes a receipt issuing unit and a list issuing unit. The receipt issuing unit prints a receipt based on sales information on a receipt sheet to issue the receipt. The list issuing unit prints a merchandise list in which supplementary information is added to correspond to merchandise names on the receipt sheet to issue the merchandise list, or prints a service list in which supplementary information is added to correspond to service names on the receipt sheet to issue the service list. The receipt issuing unit issues the receipt as the merchandise list or the service list, without printing at least a part of the supplementary information.

## Description

### BACKGROUND OF THE INVENTION

### 1. Field of the Invention

The present invention relates to a sales information processing device and a storage medium.

### 2. Description of the Related Art

An electronic cash register (ECR) is installed in a store such as a retail store or a restaurant and registers sales data in commercial transactions. The electronic cash register prints registered sales data or details of an accounting process on a receipt sheet using a printer to issue a receipt. In the related art, an electronic cash register is known which conveys a receipt sheet in a longitudinal direction to a printer and issues a receipt such that a short direction thereof is a writing direction and the character direction is perpendicular to the short direction, that is, so as to be visually recognized in horizontal writing. An electronic cash register has also been proposed which issues a receipt to be visually recognized in vertical writing as described in JP-A-H06-020160.

In retail stores, restaurants, or the like, a merchandise list such as a menu may be distributed to customers. When a merchandise item of the season of which a stock can be seen on the day is provided on only the day, it is necessary to more easily prepare the menu.

### SUMMARY OF THE INVENTION

An object of the present invention is to more easily prepare a merchandise list or a service list such as a menu.

According to an aspect of the present invention, a sales information processing device includes a receipt issuing unit and a list issuing unit. The receipt issuing unit prints a receipt based on sales information on a receipt sheet to issue the receipt. The list issuing unit prints a merchandise list in which supplementary information is added to correspond to merchandise names on the receipt sheet to issue the merchandise list, or prints a service list in which supplementary information is added to correspond to service names on the receipt sheet to issue the service list. The receipt issuing unit issues the receipt as the merchandise list or the service list, without printing at least a part of the supplementary information.

According to another aspect of the present invention, a non-transitory computer-readable storage medium having a program recorded thereon, which causes a computer of a sales information processing device to perform: printing a receipt based on sales information on a receipt sheet to issue the receipt; printing a merchandise list in which supplementary information is added to correspond to merchandise names on the receipt sheet to issue the merchandise list, or printing a service list in which supplementary information is added to correspond to service names on the receipt sheet to issue the service list. The issuing of the receipt includes issuing the receipt as a merchandise list or a service list without printing of at least a part of the supplementary information.

According to the present invention, it is possible to more easily prepare a merchandise list or a service list such as a menu.

### BRIEF DESCRIPTION OF THE DRAWINGS

Fig. 1 is a diagram illustrating a hardware configuration of a sales information processing device according to a first embodiment of the present invention.
Fig. 2 is a block diagram illustrating a logical configuration of the sales information processing device according to the first embodiment.
Fig. 3A is a diagram illustrating a list selection screen in the sales information processing device according to the first embodiment and Fig. 3B is a diagram illustrating an item list input and confirmation screen.
Fig. 4A is a diagram illustrating a today's market price input and confirmation screen in the sales information processing device according to the first embodiment and Fig. 4B is a diagram illustrating a course details input and confirmation screen.
Fig. 5 is a diagram illustrating a configuration of a PLU file according to the first embodiment.
Fig. 6 is a diagram illustrating an example of an item list.
Fig. 7 is a diagram illustrating an example of today's market price.
Fig. 8 is a diagram illustrating an example of course details.
Fig. 9 is a diagram illustrating a vertically written receipt.
Fig. 10A is a diagram illustrating mode transition in the sales information processing device according to the first embodiment and Fig. 10B is a flowchart illustrating a receipt issuing process.
Fig. 11 is a flowchart illustrating a receipt issuing process in the sales information processing device according to the first embodiment.
Fig. 12 is a diagram illustrating a configuration of a PLU file according to a second embodiment of the present invention.
Fig. 13 is a diagram illustrating an example of an item list.
Fig. 14 is a diagram illustrating a vertically written receipt.

### DETAILED DESCRIPTION OF THE PREFERRED EMBODIMENT

Hereinafter, embodiments of the present invention will be described in detail with reference to the accompanying drawings.

The drawings schematically illustrate the present invention to such an extent to sufficiently understand the present invention. Therefore, the present invention is not limited to the illustrated examples. Common elements or like elements in the drawings will be referenced by like reference numerals and description thereof will not be repeated.

In the following description, unless mentioned differently, an "item list" means a menu in which provided merchandise names or service names are arranged and written.

"Today's market price" means a menu in which specific prices of merchandise in which a market price is written as a price in the "item list" are written. "Course details" means a menu in which when plural pieces of merchandise or services are provided as a set, individual merchandise names or service names included in the set are arranged and written. That is, the "today's market price" and the "course details" have a meaning of the "item list", but are described to be distinguished from the "item list" for the purpose of convenience of explanation.

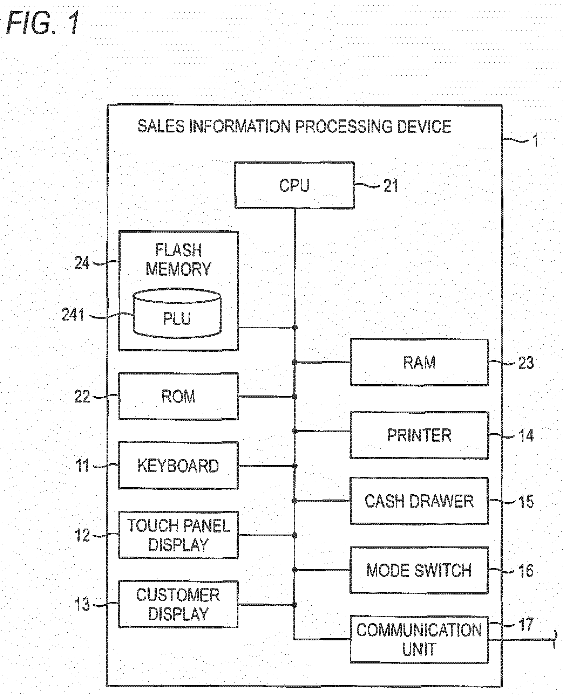

Fig. 1 is a diagram illustrating a hardware configuration of a sales information processing device 1 according to a first embodiment of the present invention.

The sales information processing device 1 is installed in a store such as a retail store or a restaurant and registers sales data in commercial transactions (which includes details of the commercial transactions). Herein, an example in which the sales information processing device 1 is applied to an electronic cash register will be described.

The sales information processing device I includes a keyboard 11, a touch panel display 12, a customer display 13, a printer 14, a cash drawer 15, a mode switch 16, a communication unit 17, a central processing unit (CPU) 21, a read only memory (ROM) 22, a random access memory (RAM) 23, and a flash memory 24. The elements are connected to communicate with each other via an internal bus or input and output circuits (not illustrated).

The keyboard 11 includes plural buttons (hard keys) used to operate the sales information processing device 1. The keyboard 11 includes, for example, numeric keys for inputting numerals, a subtotal key for displaying a subtotal amount of prices of temporarily registered merchandise, and a settlement key for registration finishing and settlement.

The touch panel display 12 is, for example, a combination of a liquid crystal display device and a position input device. The touch panel display 12 displays names, prices, quantities, and the like of registered merchandise for an operator, displays buttons (soft keys) on a screen, and receives an input from the position input device based on the buttons.

The customer display 13 is, for example, a liquid crystal display device. The customer display 13 displays prices, quantities, and the like of registered merchandise for customers.

The printer 14 is, for example, a thermal transfer printer and serves to print a receipt based on sales information on a receipt sheet to issue the receipt. The printer 14 can print a menu such as an item list, a today's market price, and a course details as a merchandise list on the receipt sheet.

The cash drawer 15 is a drawer storing paper money, coins, notes, and the like which are treated for accounting for merchandise. The cash drawer 15 slides to an operator side (near side) to be opened by the operator's operation of the keyboard 11.

The mode switch 16 serves to switch an operation mode of the sales information processing device 1. Examples of the operation mode of the sales information processing device 1 include a "sales registration mode" in which registration of sales (accounting process) and issuance of a receipt in commercial transactions are carried out and a "list issuance mode" in which a menu such as an item list, a today's market price, or a course details is printed as a merchandise list on a receipt sheet.

The communication unit 17 serves to electrically connect the sales information processing device 1 to an external device. When the communication unit 17 is not used, the communication unit 17 may be covered with a cover.

The CPU 21 is a central controller and comprehensively controls the sales information processing device 1. For example, the CPU 21 controls various operations such as a merchandise registering process, an accounting process, a display process on the touch panel display 12 or the customer display 13, and a printing process of a receipt or a merchandise list.

The ROM 22 is a nonvolatile memory unit which is readable and stores a control program or the like which is executed by the CPU 21.

The RAM 23 is a volatile memory unit which is writable and readable and is a temporary memory unit which is used by the CPU 21.

The flash memory 24 is a nonvolatile memory unit which is writable and readable and is configured to be used as a temporary memory unit by the CPU 21. The flash memory 24 stores a price lookup (PLU) file 241. The PLU file 241 is a file in which merchandise names and unit prices are correlated. A unit price of merchandise can be determined based on the merchandise name thereof and sales thereof can be registered using the PLU file 241.

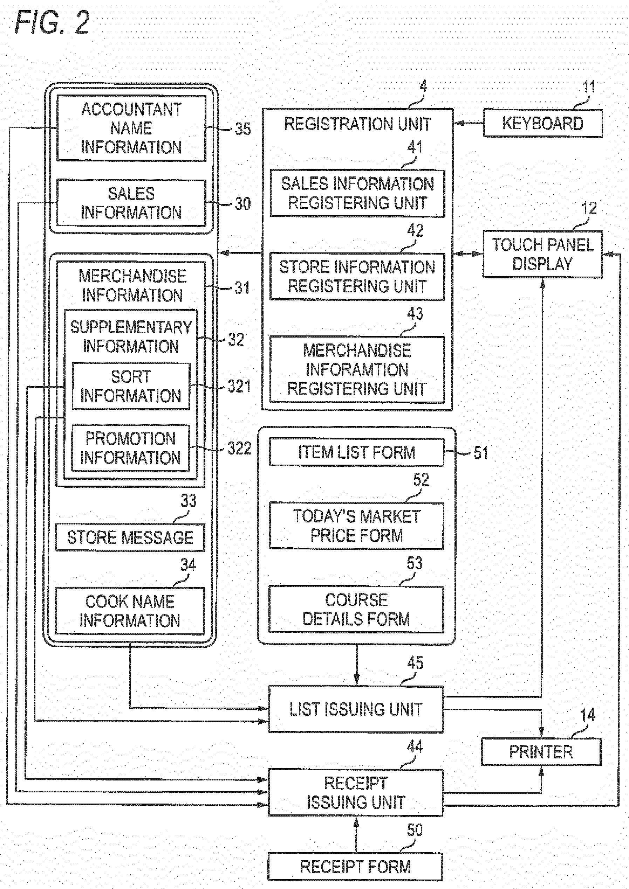

Fig. 2 is a block diagram illustrating a logical configuration of the sales information processing device 1 according to the first embodiment of the present invention and will be appropriately referred to along with Fig. 1.

The CPU 21 (see Fig. 1) of the sales information processing device 1 embodies a registration unit 4, a receipt issuing unit 44, a list issuing unit 45, and the like by executing a program (not illustrated) stored in the ROM 22. The sales information processing device 1 stores sales information 30, merchandise information 31, store message 33, cook name information 34, and accountant name information 35 in the flash memory 24.

The sales information 30 is information on sales of merchandise. The merchandise information 31 is information of names or unit prices of merchandise which is handled in the store and includes supplementary information 32. The supplementary information 32 is information that supplementally describes the merchandise which is handled in the store and includes sort information 321 indicating categories of merchandise and promotion information 322 which is information for promotion to customers. The store message 33 is a message from the store to customers. The cook name information 34 is name information of cooks of the store and the accountant name information 35 is name information of a person involved in accounting.

The registration unit 4 displays various input items or soft keys on the touch panel display 12 and receives an input operation using the keyboard I I or the touch panel display 12 to acquire a variety of input information. The registration unit 4 includes a sales information registering unit 41, a store information registering unit 42, and a merchandise information registering unit 43.

In performing an accounting process, the sales information registering unit 41 receives an input operation of a price using the keyboard 11 or the touch panel display 12 and registers names, quantities, prices, and the like of merchandise to be sold as the sales information 30 based on the PLU file 241 in the flash memory 24.

The store information registering unit 42 registers the cook name information 34, the accountant name information 35, the store message 33, and the like using input information from the keyboard 11 or the touch panel display 12.

In master-registering a variety of information corresponding to the merchandise, the merchandise information registering unit 43 registers names, unit prices, and the like of merchandise as the merchandise information 31 using the input information from the keyboard 11 or the touch panel display 12, registers categories of the merchandise as the sort information 321, and registers production areas, cooking methods, or the like of the merchandise as the promotion information 322.

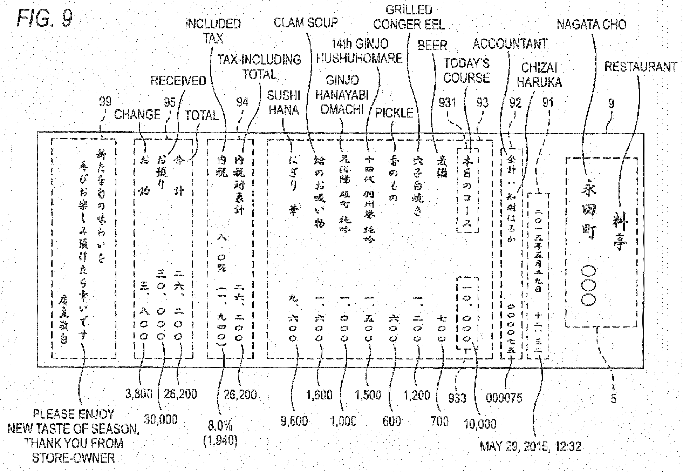

The receipt issuing unit 44 prints a receipt 9 (see Fig. 9) based on the sales information 30 on a receipt sheet using the printer 14 to issue the receipt and displays details of the receipt on the touch panel display 12 or the customer display 13.

The receipt issuing unit 44 prints a receipt 9 laid out based on a receipt form 50 on a receipt sheet. The receipt issuing unit 44 issues the receipt 9 as a merchandise list in which printing of at least a part of the supplementary information 32 to be printed in correspondence with merchandise names in a merchandise list issued by the list issuing unit 45 to be described later is skipped.

The list issuing unit 45 prints a merchandise list to which the supplementary information 32 is added in correspondence with the merchandise names on a receipt sheet to issue the merchandise list and displays details of the merchandise list on the touch panel display 12 or the customer display 13. Here, the merchandise list is, for example, the item list, the today's market price, the course details, or the like.

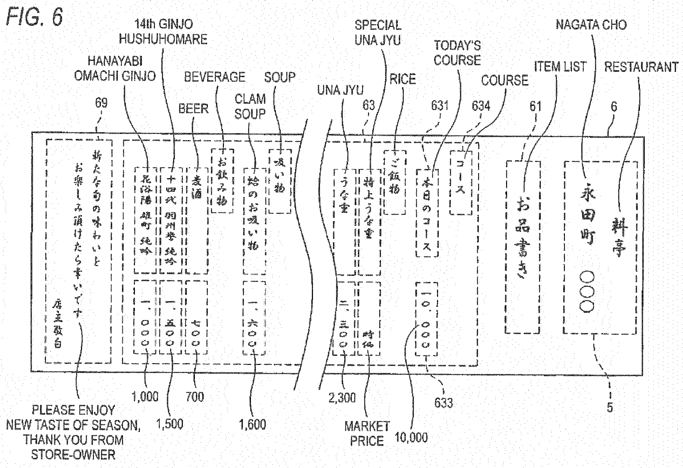

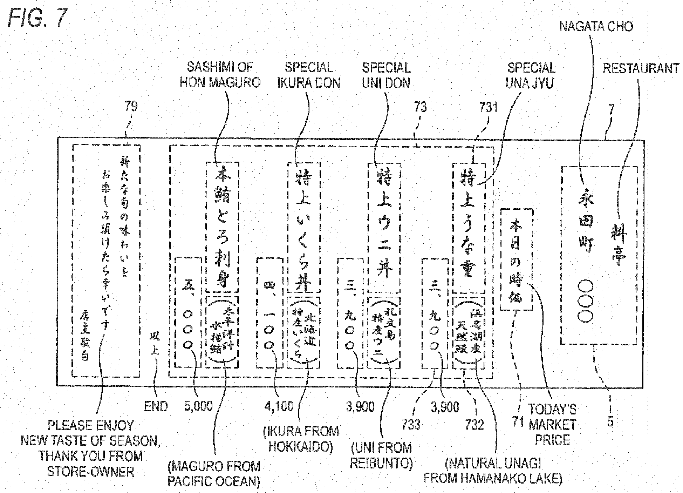

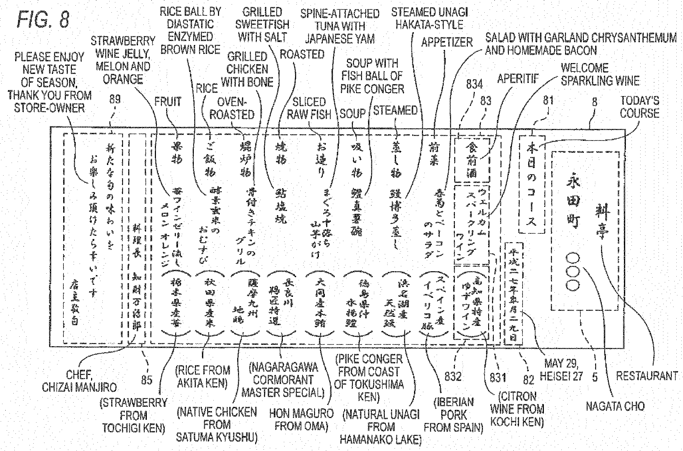

The list issuing unit 45 lays out and issues an item list 6 based on an item list form 51 when issuing the item list 6 (see Fig. 6), lays out and issues a today's market price 7 based on a today's market price form 52 when issuing the today's market price 7 (see Fig. 7), and lays out and issues a course details 8 based on a course details form 53 when issuing the course details 8 (see Fig. 8).

The list issuing unit 45 prints the supplementary information 32 of which printing is skipped in the receipt 9 (see Fig. 9) as a part of the merchandise information 31, when issuing a merchandise list.

For example, the list issuing unit 45 prints the sort information 321 as a part of the merchandise information 31 when issuing the item list 6 (see Fig. 6), prints the promotion information 322 as a part of the merchandise information 31 when issuing the today's market price 7, and prints the sort information 321 and the promotion information 322 as a part of the merchandise information 31 when issuing the course details 8.

The receipt form 50, the item list form 51, the today's market price form 52, the course details form 53, and the like are stored, for example, in the ROM 22, the flash memory 24, or the like.

In this embodiment, printed matters such as the receipt 9, the item list 6, the today's market price 7, and the course details 8 are printed to be visually recognized as vertical writing, but may be printed to be visually recognized as horizontal writing.

When the sales information processing device 1 is used in a Japanese-style store or the like, it is preferable that the printed matters be printed to be visually recognized as vertical writing, because a harmony with a store image can be achieved to provide a high-grade sensation.

The printer 14 (see Fig. 1) draws out a long sheet, which is wound in a roll shape as a roll sheet, as a receipt sheet and performs a printing operation on the receipt sheet. The receipt issuing unit 44 or the list issuing unit 45 performs a printing operation such that the short direction of the receipt sheet is the writing direction and the character direction is the short direction.

The character direction of fonts used in the printed matters is the same as the short direction of the receipt sheet. Accordingly, the printed matters can be visually recognized as vertical writing.

Here, the receipt form 50 is a form for printing a receipt 9 illustrated in Fig. 9 to be described later and will be described later with reference to Fig. 9.

The item list form 51 is a form for printing an item list 6 illustrated in Fig. 6 to be described later and will be described later with reference to Fig. 6.

The today's market price form 52 is a form for printing a today's market price 7 illustrated in Fig. 7 to be described later and will be described later with reference to Fig. 7.

The course details form 53 is a form for printing a course details 8 illustrated in Fig. 8 to be described later and will be described later with reference to Fig. 8.

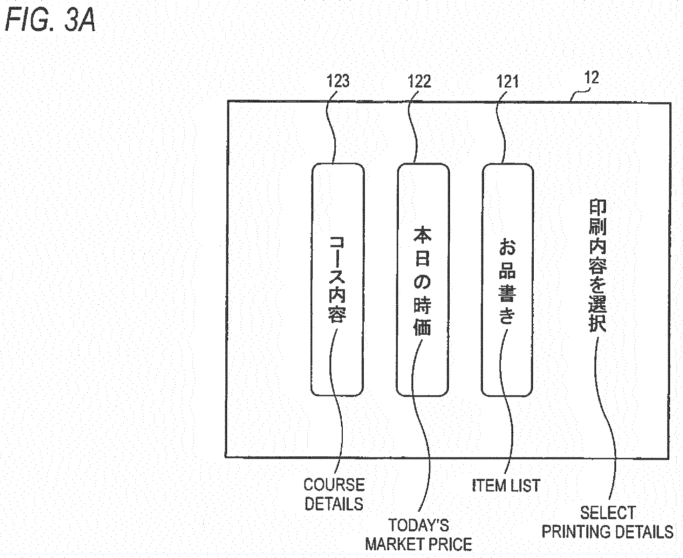

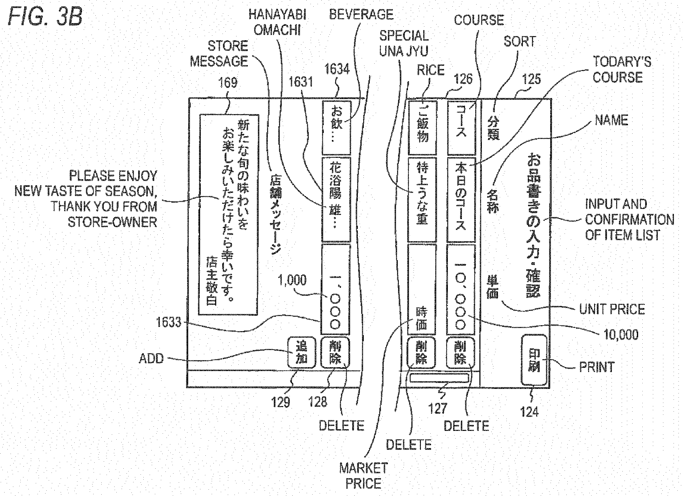

Figs. 3A and 3B are diagrams illustrating examples of a display screen of the sales information processing device 1 according to the first embodiment of the present invention.

Fig. 3A is a diagram illustrating a list selection screen in the "list issuance mode."

Fig. 3B is a diagram illustrating a today's market price input and confirmation screen when the today's market price is selected in the list selection screen.

As illustrated in Fig. 3A, the sales information processing device 1 according to the first embodiment displays the list selection screen on the touch panel display 12 when the "list issuance mode" is selected.

That is, this screen is displayed when an operator sets the mode switch 16 (see Fig. 1) to "list issuance."

In the list selection screen, a type of a merchandise list to be printed by the printer 14 can be selected. In this embodiment, the item list 6 (see Fig. 6), the today's market price 7 (see Fig. 7), or the course details 8 (see Fig. 8) can be selected as the type of the merchandise list to be printed and an item list button 121, a today's market price button 122, and a course details button 123 are displayed as soft keys in correspondence therewith, but the present invention is not particularly limited thereto.

When the item list button 121 is pushed, the item list input and confirmation screen is displayed for the operator as illustrated in Fig. 3B and then the item list 6 (see Fig. 6 to be described later) is printed.

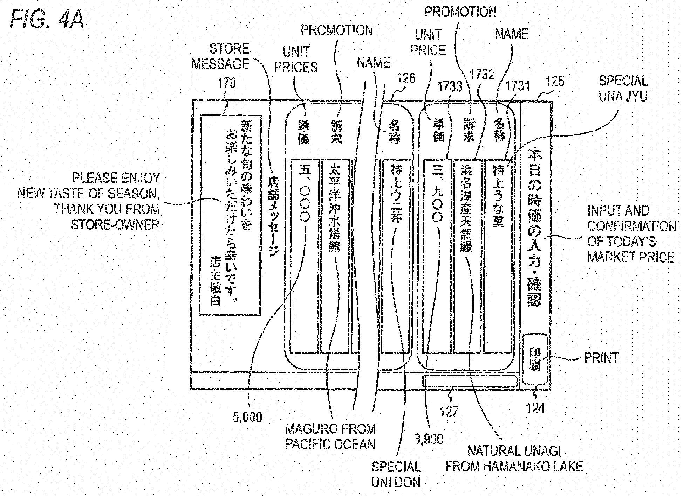

When the today's market price button 122 is pushed, the today's market price input and confirmation screen is displayed for the operator as illustrated in Fig. 4A to be described later and then the today's market price 7 (see Fig. 7 to be described later) is printed.

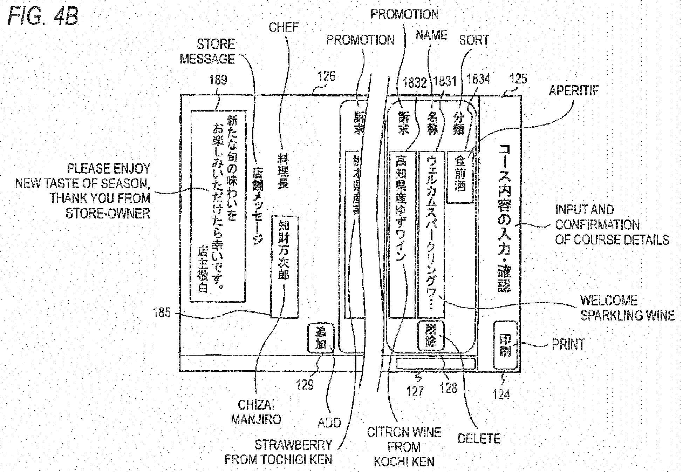

When the course details button 123 is pushed, the course details input and confirmation screen is displayed for the operator as illustrated in Fig. 4B to be described later and then the course details 8 (see Fig. 8 to be described later) is printed.

The item list input and confirmation screen illustrated in Fig. 3B includes a title pane 125 on the right side and a list pane 126 on the left side.

In the list pane 126, a sort information text box 1634, a merchandise name text box 1631, a unit price text box 1633, and a delete button 128 are arranged in vertical writing.

Here, since the sort information text box 1634, the merchandise name text box 1631, and the unit price text box 1633 are vertically written, the text boxes can be matched with the item list 6 (see Fig. 6 to be described later) which is printed as vertical writing.

The sort information text box 1634 is a text box in which the sort information 321 can be displayed to be editable, and the merchandise name text box 1631 and the unit price text box 1633 also display merchandise names and unit prices to be editable in the same way. The delete button 128 deletes the corresponding merchandise item.

The operator can arbitrarily edit information of the text boxes. Accordingly, the operator can arbitrarily edit the merchandise information 31 based on the item list 6.

The list pane 126 can be scrolled horizontally using a scroll bar 127. An add button 129 added to the end of the arrangement is used to add a new merchandise item.

A store message text box 169 is disposed on the upper-left side of the add button 129 and thus the store message 33 is displayed therein to be editable. The operator can change the store message 33 to a desired message by arbitrarily editing the information of the store message text box 169.

A print button 124 disposed in the title pane 125 fixes the editing result and prints the item list 6 (see Fig. 6).

Figs. 4A and 4B are diagrams illustrating examples of a display screen of the sales information processing device I according to the first embodiment of the present invention.

Fig. 4A is a diagram illustrating a today's market price input and confirmation screen when a today's market price button 122 is pushed in the list selection screen.

Fig. 4B is a diagram illustrating a course details input and confirmation screen when a course details button 123 is selected in the list selection screen.

Similarly to the input and confirmation screen illustrated in Fig. 3B, the today's market price input and confirmation screen illustrated in Fig. 4A includes a title pane 125 on the right side and a list pane 126 on the left side.

In the list pane 126, a merchandise name text box 1731, a promotion information text box 1732, and a unit price text box 1733 are arranged horizontally in vertical writing for each piece of merchandise.

The merchandise name text box 1731, the promotion information text box 1732, and the unit price text box 1733 display a merchandise name, promotion information 322, and a unit price, respectively, so as to be editable.

The list pane 126 can be scrolled horizontally using a scroll bar 127. An operator can arbitrarily edit information in the text boxes.

Accordingly, the merchandise information 31 based on the today's market price 7, particularly, the unit price and the promotion information 322, can be arbitrarily edited.

In the input and confirmation screen illustrated in Fig. 4A, deleting or adding of a merchandise item is not performed. This is because the operation is the same as the operation on the input and confirmation screen illustrated in Fig. 3B.

A store message text box 179 is disposed at the left end of the list pane 126, and the store message 33 is displayed to be editable. An operator can change the store message 33 to a desired message by arbitrarily editing information in the store message text box 179.

A print button 124 disposed in the title pane 125 fixes the editing results and prints the today's market price 7 (see Fig. 7).

Similarly to the input and confirmation screen illustrated in Fig. 3B, the course details input and confirmation screen illustrated in Fig. 4B includes a title pane 125 on the right side and a list pane 126 on the left side.

In the list pane 126, a sort information text box 1834, a merchandise name text box 1831, a promotion information text box 1832, and a delete button 128 are arranged as vertical writing for each piece of merchandise and the delete button 128 is disposed below.

The sort information text box 1834 is a text box in which the sort information 321 is displayed to be editable, and the merchandise name text box 1831 and the promotion information text box 1832 also display merchandise name and promotion information 322, respectively, to be editable similarly. The delete button 128 is used to delete a corresponding merchandise item.

The list pane 126 can be scrolled horizontally using a scroll bar 127. An add button 129 disposed at the end of the arrangement is used to add a new merchandise item. Accordingly, an operator can arbitrarily edit the merchandise information 31 based on the course details 8.

A cook name text box 185 and a store message text box 169 are arranged on the upper-left side of the add button 129. The cook name information 34 is displayed to be editable in the cook name text box 185, and the storage message 33 is displayed to be editable in the store message text box 169.

An operator can change the cook name information 34 and the store message 33 to desired information by arbitrarily editing information in the text boxes.

The print button 124 disposed in the title pane 125 fixes the editing results and print the course details 8 (see Fig. 8).

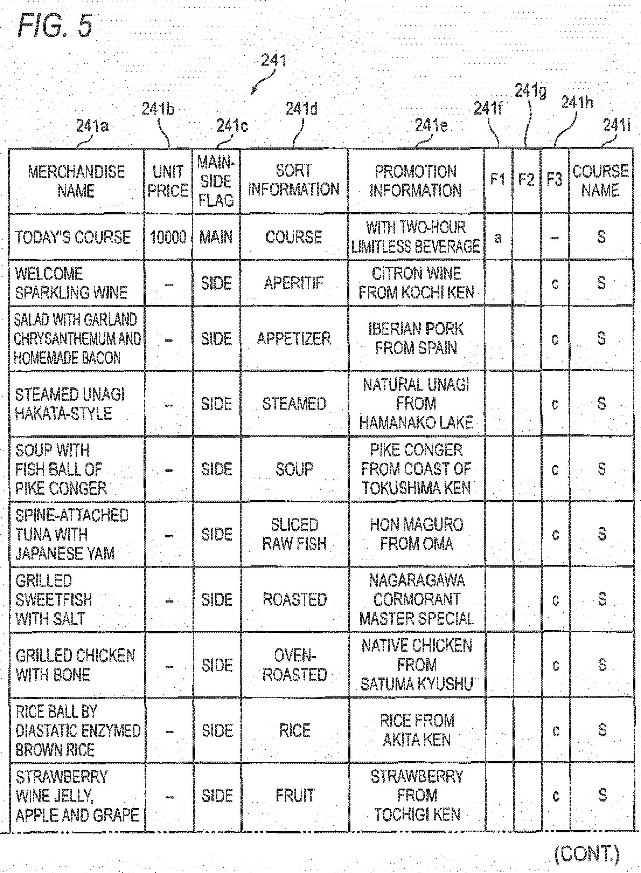

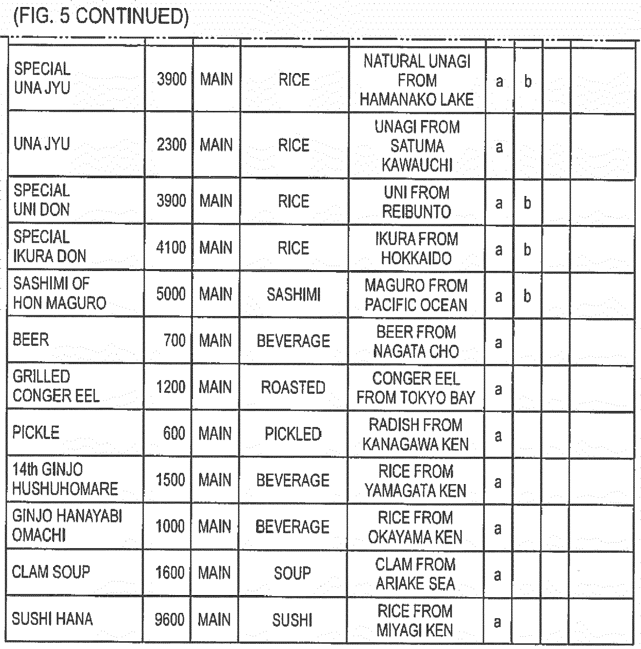

Fig. 5 is a diagram illustrating a configuration of the PLU file 241 according to the first embodiment and will be appropriately referred to along with Fig. 2.

For example, as illustrated in Fig. 5, the PLU file 241 includes a merchandise name field 241, a unit price filed 241b, a main-side flag field 241c, a sort information field 241d, a promotion information field 241e, a flag 1 field 241f, a flag 2 field 241g, a flag 3 field 241 h, and a course name field 241i. In Fig. 5, flag 1, flag 2, and flag 3 are abbreviated to F1, F2, and F3, respectively.

Merchandise names are stored in the merchandise name field 241a. A customer orders a dish based on the merchandise names and a store registers sales based on the merchandise names. Information in the merchandise name field 241a is displayed to be editable in the merchandise name text box 1631 illustrated in Fig. 3B, the merchandise name text box 1731 illustrated in Fig. 4A, or the merchandise name text box 1831 illustrated in Fig. 4B.

Unit prices of the merchandise items are stored in the unit price field 241b. When a corresponding merchandise item is a side dish constituting a course dish, an input to the unit price field 241b is skipped. In Fig. 5, the skip of an input is marked by "-." Information in the unit price field 241b is displayed to be editable in the unit price text box 1633 illustrated in Fig. 3B or the unit price text box 1733 illustrated in Fig. 4A.

A master-servant relationship of a merchandise item is stored in the main-side flag field 241c. In the main-side flag field 241c, "main" is stored for a course dish or a single dish, and "side" is stored for a dish subordinate to a main dish. A side dish subordinate to a main dish is disposed in a record successive to the main dish. The information in the merchandise name field 241a, the unit price field 241b, and the main-side flag field 241c constitutes the merchandise information 31 (see Fig. 2).

The sort information 321 (see Fig. 2) indicating a sort of each merchandise item is stored in the sort information field 241d. In the sort information field 241d, for example, "rice" is stored for "special Una Jyu," "Una Jyu," "special Uni Don", "special Ikura Don." Since the merchandise items printed in the item list 6 to be described later are grouped for each sort of merchandise based on the sort information field 241d, a customer can find out a desired merchandise item from the item list 6. The information stored in sort information field 241d is displayed to be editable in the sort information text box 1634 illustrated in Fig. 3B or the sort information text box 1834 illustrated in Fig. 4B.

The promotion information 322 (see Fig. 2) for promoting each merchandise item to customers is stored in the promotion information field 241e. The information stored in the promotion information field 241e is displayed to be editable in the promotion information text box 1732 illustrated in Fig. 4A or the promotion information text box 1832 illustrated in Fig. 4B.

Here, for example, the promotion information 322 for promoting a merchandise item to customers may be production area information, raw material information, or cooking methods of the merchandise item, may indicate a provision condition such as the time of limitless beverage, or may appeal that used ingredients are high-grade ingredients of the season.

The promotion information may appeal that used ingredients are ingredients which are purveyed or recommended by an authority figure or organization. For example, a providing condition of "with two-hour limitless beverage" is stored in the promotion information field 241e of the "today's course."

Production area information or raw material information of "Kochi yuzu wine" is stored in the promotion information field 241e of "welcome sparkling wine." The information stored in the sort information 241d and the promotion information field 241e constitutes the supplementary information 32 (see Fig. 2).

The flag 1 field 241f is a flag indicating whether the corresponding merchandise item is an item which should be printed in the item list 6 (see Fig. 6 to be described later). In the flag 1 field 241f, flag a is stored for a merchandise item provided as a "today's course" or a single dish.

The flag 2 field 241 g is a flag indicating whether the corresponding merchandise item is an item which should be printed in the today's market price 7 (see Fig. 7 to be described later). In the flag 2 field 241g, for example, flag b is stored for "special Una Jyu," "special Uni Don", "special Ikura Don," and "Sashimi of Hon Maguro."

The flag 3 field 241 h is a flag indicating whether the corresponding merchandise item is an item subordinate to a course dish and is the same as the main-side flag 241c.

The course name field 241i is a field indicating whether the corresponding merchandise item is an item which should be printed in the course details 8 to be described later. In the course name field 241i, course name "S" is stored for the "today's course." When there are plural course menus, names for identifying the courses are stored in the course name field 241i.

An example in which providable merchandise information 31 is printed as a merchandise list on a receipt sheet and is issued by the sales information processing device 1 is illustrated in Figs. 6 to 8.

Fig. 6 is a diagram illustrating an example of the item list 6 and will be appropriately referred to along with Figs. 2 to 4 or the like.

As illustrated in Fig. 6, the layout of the item list 6 includes a store image area 5, a title area 61 in which "ITEM LIST" is printed, a list area 63, a store message area 69. The layout of the item list 6 is defined in the item list form 51 (see Fig. 2) and details thereof will be described below.

For example, a trade name, a store name, or an image relevant to a design such as a family crest, an emblem, a signature and seal, or a brand mark of the store is inserted into the store image area 5. The present invention is not limited to this example, but text data may be inserted into the store image area 5. In other words, information capable of uniquely identifying the subject providing the item list 6 can be inserted into the store image area 5.

A character string oF "ITEM LIST" indicating that the printed matter is the item list 6 is printed in the title area 61. The expression thereof is not particularly limited.

The sort information areas 634 are arranged in the list area 63, combinations of a name area 631 and a price area 632 are arranged for each sort information area 634, and a list of merchandise items which can be independently ordered by a customer is printed therein.

The information in the sort information field 241 of the PLU file 241 is printed in the sort information area 634. The information in the merchandise name field 241 of the PLU file 241 is printed in the name area 631, and the information in the unit price field 241b of the PLU file 241 is printed in the price area 632.

"Market price" is printed for a menu in which flag b is set in the flag 2 field 241g. Specifically, speaking, "market price" is printed as the price of "Special Una Jyu." Accordingly, it is possible to print the item list 6 without inputting the market price.

For example, a message from the store to customers is printed in the storage message area 69. The store message area 69 is a sentence which is commented by a representative of the store and the store message 33 (see Fig. 2) is printed. Not limited to this example, an image as a message from the store to customers may be printed.

The item list 6 illustrated in Fig. 6 is printed when an operator switches the mode switch 16 (see Fig. 1) to the "list issuance mode" and selects the item list button 121 (see Fig. 3A). At this time, the list issuing unit 45 performs a printing operation based on the merchandise information 31, the supplementary information 32, and the store message 33 (see Fig. 2) using the item list form 51.

Fig. 7 is a diagram illustrating an example of the today's market price 7 and will be appropriately referred to along with Figs. 3 to 6 or the like.

As illustrated in Fig. 7, the layout of the today's market price 7 includes a store image area 5, a title area 71, a list area 73, and a store message area 79. The layout of the today's market price 7 is defined in the today's market price form 52 (see Fig. 2) and details thereof will be described below.

The store image area 5 is the same as the store image area 5 of the item list 6 (see Fig. 6) and thus detailed description thereof will not be repeated.

A character string of "today's market price" indicating that the printed matter is a menu based on the today's market price is printed in the title area 71. The expression thereof is not particularly limited.

A list of merchandise items which are provided to customers at market prices, in which combinations of a name area 731, a promotion information area 732, and a price area 733 are arranged, is printed in the list area 73.

The information in the merchandise name field 241a of the PLU file 241 (see Fig. 5) is printed in the name area 731.

The information in the promotion information field 241e and the information in the unit price field 241b of the PLU file 241 are printed in the promotion information area 732 and the price area 733, respectively.

The store message area 79 is the same as the store message area 69 of the item list 6 (see Fig. 6) and thus detailed description thereof will not be repeated. The store message 33 (see Fig. 2) is printed in the store message area 79.

The today's market price 7 illustrated in Fig. 7 is printed when an operator switches the mode switch 16 (see Fig. 1) to the "list issuance mode" and selects the today's market price button 122 (see Fig. 3A). At this time, the list issuing unit 45 (see Fig. 2) performs a printing operation based on the merchandise information 31, the supplementary information 32, and the store message 33 (see Fig. 2) using the today's market price form 52.

Fig. 8 is a diagram illustrating an example of the course details 8 and will be appropriately referred to along with Figs. 2 to 6 or the like.

As illustrated in Fig. 8, the layout of the course details 8 includes a store image area 5, a title area 81 in which "today's course" is printed, a date area 82, a list area 83, a cook name area 85, and a store message area 89.

The layout of the course details 8 is defined in the course details form 53 (see Fig. 2) and details thereof will be described below.

The store image area 5 is the same as the store image area 5 of the item list 6 (see Fig. 6) and thus detailed description thereof will not be repeated.

A character string of "today's course" indicating menu details of a course dish is printed in the title area 81. The expression thereof is not particularly limited.

The date on which the printed matter is printed is printed in the date area 82.

A list of dishes constituting the "today's course", in which combinations of a sort information area 834, a name area 831, and a promotion information area 832 are arranged, is printed in the list area 83. The information in the merchandise name field 241a of the PLU file 241 (see Fig. 5) is printed in the name area 831. The information in the sort information field 241d and the information in the promotion information area 832 of the PLU file 241 are printed in the sort information area 834 and the promotion information area 832, respectively.

The name of a representative cook is printed as a chef in the cook name area 85. Information printed in the cook name area 85 is the cook name information 34.

The store message area 89 is the same as the store message area 69 of the item list 6 (see Fig. 6) and thus detailed description thereof will not be repeated. The store message 33 (see Fig. 2) is printed in the store message area 89.

The course details 8 illustrated in Fig. 8 is printed when an operator switches the mode switch 16 (see Fig. 1) to the "list issuance mode" and selects the course details button 123 (see Fig. 3A). At this time, the list issuing unit 45 (see Fig. 2) performs a printing operation based on the merchandise information 31, the supplementary information 32, the store message 33, and the cook name information 34 (see Fig. 2) using the course details form 53.

A receipt 9 which is printed by the sales information processing device 1 will be described below appropriately with reference to Fig. 9 along with Figs. 2 to 5 or the like. Fig. 9 illustrates an example in which the receipt is printed as vertical writing, but the receipt may be printed as horizontal writing.

As illustrated in Fig. 9, the layout of the receipt 9 includes a storage image area 5, an accounting time area 91, an accountant name area 92, a list area 93, a consumption tax area 94, a balance area 95, and a store message area 99. The layout of the receipt 9 is defined in the receipt form 50 (see Fig. 2) and details thereof will be described below.

The storage image area 5 is the same as the storage image area 5 of the item list 6 (see Fig. 6) and thus detailed description thereof will not be repeated. The date and time at which the accounting process is performed is printed in the accounting time area 91.

The name of a person having performed the accounting process is printed in the accountant name area 92. The accountant name information 35 (see Fig. 2) is printed in the accountant name area 92.

A list of merchandise items provided to the customer, in which combinations of a name area 931 and a price area 933 are arranged, is printed in the list area 93. The information in the merchandise name field 241a of the PLU file 241 (see Fig. 5) is printed in the name area 931. The information in the unit price field 241b of the PLU file 241 is printed in the price area 933. Although not illustrated herein, the provided quantities are printed on the left row of the name area 931 when plural pieces of a merchandise item are provided to the customer.

The consumption tax area 94 includes, for example, a total sum (tax-including total) of taxable items as display of an included tax and display of a consumption tax and a tax rate therein.

The balance area 95 is an area in which reception and repayment of money with the customer is written and includes, for example, a charged total sum field (total), a received money field (received), and a repayment field (change).

The store message area 99 is a message for promoting the customer to visit the store again, unlike the store message 69 of the item list 6 (see Fig. 6). Since the item list 6 is handed over to the customer before ordering a merchandise item, it is preferable that the message appeal merits of merchandise items.

On the other hand, since the receipt 9 is handed over to the customer at the time of settlement, it is preferable that the message promote the customer to visit the store again. In this way, by changing the store message 33 depending on the timings at which the printed matter is handed over to the customers, it is possible to appropriately promote the store.

The receipt 9 illustrated in Fig. 9 is printed when the operator switches the mode switch 16 (see Fig. 1) to the "sales registration mode." At this time, the receipt issuing unit 44 (see Fig. 2) performs a printing operation based on the sales information 30 and the accountant name information 35 (see Fig. 2) using the receipt form 50 (see Fig. 2).

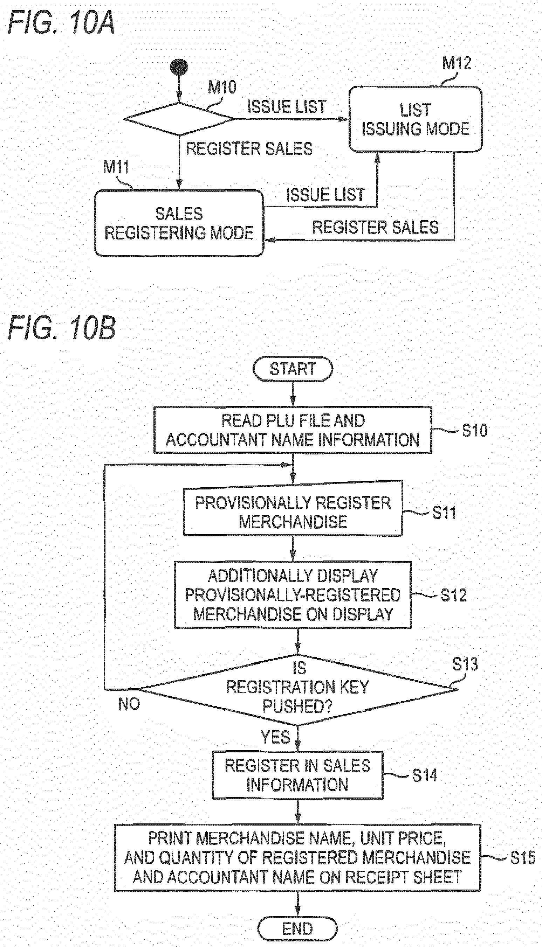

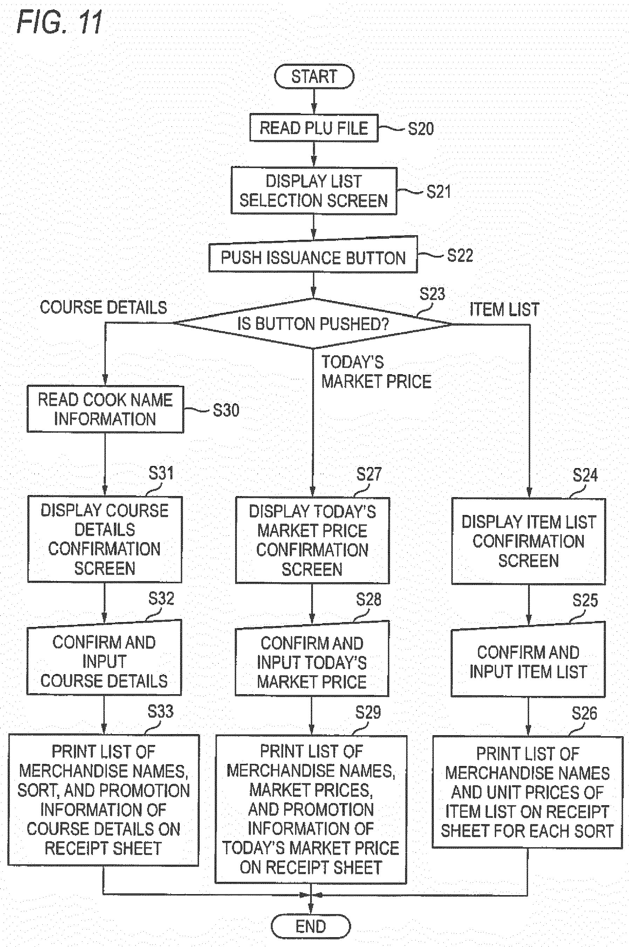

A receipt issuing process and a list issuing process of the sales information processing device 1 according to the first embodiment will be described below with reference to the mode transition diagram of Fig. 10A and the flowcharts of Figs. 10B and 11.

Fig. 10A is a diagram illustrating mode transition of the sales information processing device 1 according to the first embodiment and will be appropriately referred to along with Figs. 1 and 2.

First, the CPU 21 (see Fig. 1) determines the state of the mode switch 16 (mode M 10). The operation mode transitions to the sales registration mode (mode M11) when the mode switch 16 is switched to the "sales registration," and transitions to the list issuance mode (mode M12) when the mode switch 16 is switched to the "list issuance."

Thereafter, the operation mode transitions to the list issuance mode (mode M12) from the sales registration mode (mode M11) when the mode switch 16 (see Fig. 1) is switched to the "list issuance." The operation mode transitions to the sales registration mode (mode M11) from the list issuance mode (mode M12) when the mode switch 16 is switched to the "sales registration."

Fig. 10B is a flowchart illustrating a sales registering process of the sales information processing device according to the first embodiment and will be appropriately referred to along with Figs. 1, 2, and 10A.

The sales information processing device 1 starts the sales registering process when the operation mode transitions to the sale registration mode (see Fig. 10A).

First, the sales information registering unit 41 (see Fig. 2) reads the PLU file 241 and the accountant name information 35 (step S10) and waits for an input. When an operator temporarily registers a merchandise item using the keyboard 11, the touch panel display 12, or the like (step S11), the sales information registering unit 41 additionally displays the temporarily registered merchandise item on the display (step S12) and repeats this operation (NO in step S13) until the registration key is pushed.

When the pushing of the registration key is detected (YES in step S13), the sales information registering unit 41 registers the temporarily registered merchandise item in the sales information 30 (step S14) and prints the merchandise name, the unit price, and the quantity of the registered merchandise item and the accountant name on a receipt sheet (step S15). Accordingly, the receipt 9 (see Fig. 9) is printed on the receipt sheet by the printer 14.

Fig. 11 is a flowchart illustrating a list issuing process of the sales information processing device 1 according to the first embodiment and will be appropriately referred to along with Figs. 1 to 5.

The sales information processing device I starts the list issuing process when the operation mode transitions to the list issuance mode (see Fig. 10A).

The list issuing unit 45 (see Fig. 2) reads the PLU file 241 (step S20).

Specifically speaking, the list issuing unit 45 appropriately reads the merchandise name field 241a, the unit price field 241 b, the sort information field 241d, the promotion information field 241e, and the like of the PLU file 241 (see Fig. 5).

The list issuing unit 45 displays the list selection screen illustrated in Fig. 3A on the touch panel display 12 (step S21).

The operator pushes down a desired print button displayed on the touch panel display 12 (see Fig. 3A) step S22). Here, the operator pushes down the item list button 121 to print the item list 6, pushes down the today's market price button 122 to print the today's market price 7, and pushes down the course details button 123 to print the course details 8.

Then, the list issuing unit 45 identifies details of the pushed print button and moves the process flow based on the identified details (step S23).

When it is determined in step S23 that the item list button 121 is pushed, the merchandise information registering unit 43 displays the item list input and confirmation screen illustrated in Fig. 3B on the touch panel display 12 (step S24). The operator inputs and confirms the item list via the input and confirmation screen (step S25).

Accordingly, when merchandise items of the season of which a stock can be seen on the day are provided on only the day, it is possible to easily prepare the menu.

Thereafter, the list issuing unit 45 groups the merchandise items in which flag a is added to the flag 1 field 241f of the PLU file 241 for each sort of merchandise and prints a list including the merchandise names and the unit prices on a receipt sheet (step S26). Accordingly, the item list 6 (see Fig. 6) is printed on the receipt sheet by the printer 14, the list issuing process ends, and thus the operator can hand over the item list 6 to a customer.

When it is determined in step S23 that the today's market price button 122 is pushed, the merchandise information registering unit 43 displays the today's market price input and confirmation screen illustrated in Fig. 4A on the touch panel display 12 (step S27).

The operator inputs and confirms the today's market price 7 via the input and confirmation screen (step S28). Accordingly, it is possible to easily prepare a menu of merchandise items of which the unit price cannot be determined in advance due to the purchase price varying every day.

The list issuing unit 45 prints a list including the merchandise names and the unit prices based on the today's market price and the promotion information 322 on a receipt sheet using the today's market price form 52 (step S29). The list issuing unit 45 prints information of the merchandise items in which flag b is added to the flag 2 field of the PLU file 241.

Accordingly, the today's market price 7 (see Fig. 7) is printed on a receipt sheet by the printer 14, the list issuing process ends, and thus the operator can hand over the today's market price 7 to the customer.

When it is determined in step S23 that the course details button 123 is pushed, the merchandise information registering unit 43 reads the cook name information 34 (step S30) and displays the course details input and confirmation screen illustrated in Fig. 4B on the touch panel display 12 (step S31).

The operator inputs and confirms the course details via the input and confirmation screen (step S32). Accordingly, when a merchandise item of the season of which a stock can be seen on the day is provided as a part of a course dish, the merchandise name can be reflected into the course details.

Thereafter, the list issuing unit 45 prints a list including the merchandise names and the sort information 321 of the course details and the promotion information 322 on a receipt sheet (step S33). The list issuing unit 45 prints information of merchandise items in which flag c is added to the flag 3 field 241h of the PLU file 241 and course name "S" is added to the course name field 241 i. Accordingly, the course details 8 (see Fig. 8) is printed on a receipt sheet by printer 14, the list issuing process ends, and the operator can hand over the course details 8 to a customer.

### Second Embodiment

In a second embodiment of the present invention, a course dish is not included in providable merchandise items, unlike the first embodiment. An item list 6A and a receipt 9A in this case will be described below.

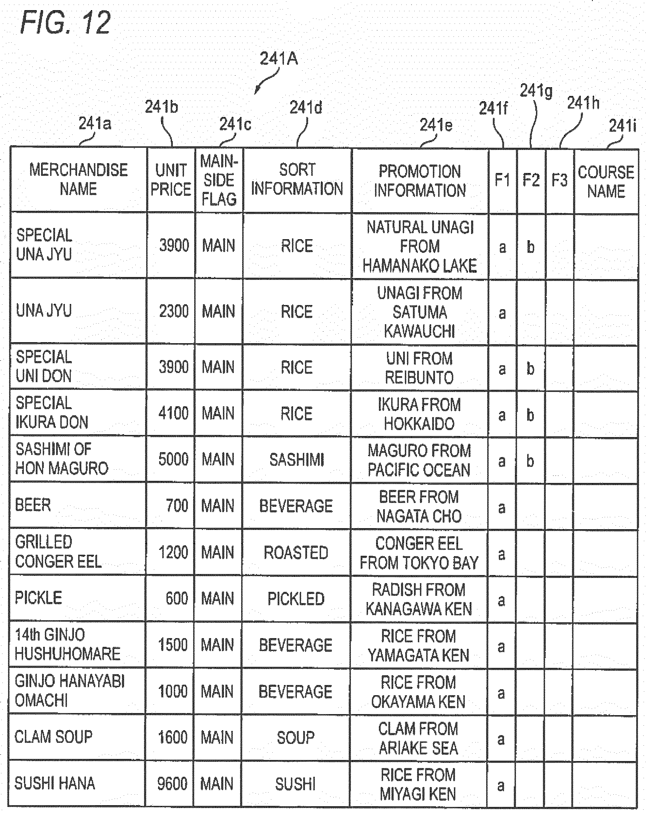

Fig. 12 is a diagram illustrating a configuration of a PLU file 241A according to the second embodiment.

The fields of the PLU file 241A according to the second embodiment are configured to be the same as the PLU file 241 according to the first embodiment illustrated in Fig. 5. However, the PLU file 241A does not include records of course dishes or records of dishes constituting the course dishes, unlike the PLU file 241 according to the first embodiment illustrated in Fig. 5.

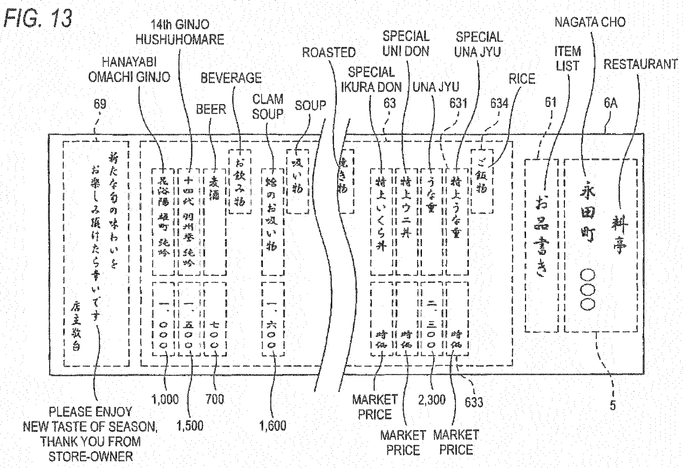

Fig. 13 is a diagram illustrating an example of the item list 6A according to the second embodiment.

Unlike the item list 6 according to the first embodiment illustrated in Fig. 6, the sort information area 634 for each "course", details and prices for each course are not printed in the item list 6A according to the second embodiment. The other configuration is the same as in the item list 6 according to the first embodiment. In the second embodiment, since processes for each course are not necessary, it is possible to more easily print the item list 6A.

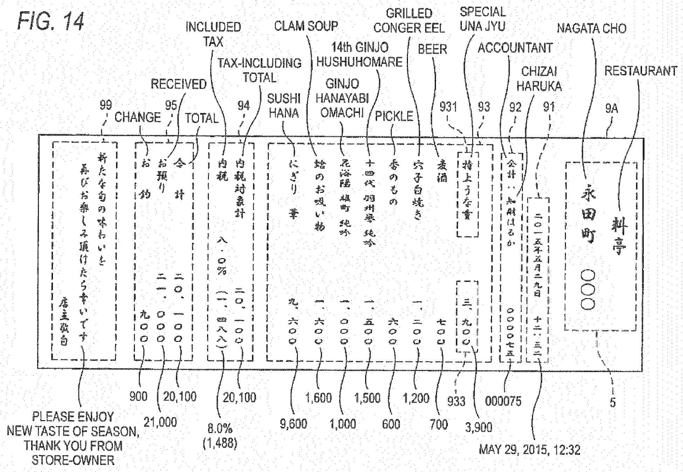

Fig. 14 is a diagram illustrating a receipt 9A in vertical writing according to the second embodiment.

Unlike the receipt 9 according to the first embodiment illustrated in Fig. 9, the "today's course" and the price thereof are not printed in the receipt 9A according to the second embodiment. The other configuration is the same as the receipt 9 according to the first embodiment.

### Operational Advantages

The sales information processing devices 1 according to the first and second embodiments print the receipt 9 based on the sales information 30 on a receipt sheet to issue the receipt, and it is possible to more easily prepare merchandise lists by additionally printing and issuing the merchandise lists such as menus on the receipt sheet. In the merchandise lists, the supplementary information 32 is added to correspond to the merchandise names.

The sales information processing device 1 can print and issue the receipt 9 in vertical writing. Accordingly, Japanese stores, sushi restaurants, high-grade restaurants, and the like can provide printed matter matching the taste of the store. The sales information processing device 1 issues the receipt 9 as a merchandise list in which printing of at least a part of the supplementary information 32 of merchandise is skipped. Accordingly, it is possible to reduce an amount of receipt sheet used in issuing the receipt 9.

The sales information processing device 1 according to the first embodiment displays the item list button 121, the today's market price button 122, and the course details button 123 so as to be editable in the list selection screen. The list issuing unit 45 prints the item list 6 on a receipt sheet to issue the item list by pushing the item list button 121, prints the today's market price 7 on a receipt sheet to issue the today's market price by pushing the today's market price button 122, and prints the course details 8 on a receipt sheet to issue the course details by pushing the course details button 123.

At this time, the list issuing unit 45 reads and prints the sort information 321 relevant to categories of merchandise items from the sort information field 241d, and reads and prints the promotion information 322 of merchandise items from the promotion information field 241e. That is, the sales information processing device 1 prints the sort information 321 or the promotion information 322 of which printing is skipped in the receipt 9 as a part of the merchandise information 31 in issuing the item list 6, the today's market price 7, or the course details 8. Accordingly, it is possible to appropriately promote merchandise to customers and thus to improve sales of the store.

The sales information processing device I can print the store message 33 or the cook name information 34 together. Accordingly, it is possible to promote the store or the cook to customers and thus to improve sales.

As described above, the sales information processing devices 1 according to the first and second embodiments can easily print the item list 6, the today's market price 7, the course details 8, or the like using the merchandise name filed 241a, the unit price field 241b (merchandise information 31), or the like stored in the PLU file 241 without inputting merchandise names, price units, or the like.

Accordingly, it is possible to hand over the item list 6, the today's market price 7, the course details 8, or the like to customers to promote the merchandise items and thus to enhance sales.

The sales information processing device 1 can print and issue the item list 6, the today's market price 7, the course details 8, or the like in vertical writing. Accordingly, Japanese stores, sushi restaurants, high-grade restaurants, and the like can provide printed matters matching the tastes of the stores.

### Modified Examples

While embodiments of the present invention have been described above, the present invention is not limited to the embodiments and can be modified in various forms without departing from the gist of the appended claims. Some modified examples will be described below.

In the above-mentioned embodiments, an electronic cash register has been exemplified as the sales information processing device 1. The sales information processing device I according to the present invention is not particularly limited to the electronic cash register, as long as the device issues a receipt.

In the above-mentioned embodiments, the sort information 321 of merchandise, the merchandise names, and the unit prices are printed in the item list 6. The present invention is not limited to this example, but the merchandise names, the unit prices, and the sort information 322 may be printed in the item list 6.

In the above-mentioned embodiments, the merchandise names, the promotion information 322, and the unit prices are printed in the today's market price 7. However, the present invention is not limited to this example, but the sort information 321 of merchandise, the merchandise names, and the unit prices may be printed in the today's market price 7.

In the above-mentioned embodiments, the receipt 9, the item list 6, the today's market price 7, the course details 8, or the like is vertically written. However, the present invention is not limited to this example, but the receipt, the items list, or the course details, and the like may be horizontally written as printed matters matching tastes of restaurants of ethnic dishes or western dishes.

Menus provided in restaurants have been exemplified in the above-mentioned embodiments, but the present invention is not limited thereto. The present invention can be applied to services (works) provided in the stores in the same way as in the above-mentioned embodiments.

## Claims

1. A sales information processing device comprising:
a receipt issuing unit that prints a receipt based on sales information on a receipt sheet to issue the receipt; and
a list issuing unit that prints a merchandise list in which supplementary information is added to correspond to merchandise names on the receipt sheet to issue the merchandise list, or that prints a service list in which supplementary information is added to correspond to service names on the receipt sheet to issue the service list,
wherein the receipt issuing unit issues the receipt as the merchandise list or the service list, without printing at least a part of the supplementary information.

2. The sales information processing device according to claim 1,
wherein the list issuing unit issues the merchandise list or the service list such that the supplementary information is visually recognized as vertical writing.

3. The sales information processing device according to claim 1,
wherein the list issuing unit issues the merchandise list or the service list including a message from a store.

4. The sales information processing device according to claim 1,
wherein the list issuing unit prints merchandise sort information and merchandise promotion information as the supplementary information, or
wherein the list issuing unit prints service sort information and service promotion information as the supplementary information.

5. A sales information processing device comprising:
a receipt issuing unit that prints a receipt based on sales information on a receipt sheet to issue the receipt; and
a list issuing unit that prints merchandise information to be provided as a merchandise list on the receipt sheet to issue the merchandise list, or that prints service information to be provided as a service list on the receipt sheet to issue the service list,
wherein the list issuing unit prints supplementary information as a part of the merchandise information or the service information, the receipt issuing unit issuing the receipt without printing the supplementary information when issuing the merchandise list or the service list.

6. The sales information processing device according to claim 5,
wherein the list issuing unit issues the merchandise list or the service list such that the supplementary information is visually recognized as vertical writing.

7. The sales information processing device according to claim 5,
wherein the list issuing unit issues the merchandise list or the service list including a message from a store.

8. The sales information processing device according to claim 5,
wherein the list issuing unit prints merchandise sort information and merchandise promotion information as the supplementary information, or
wherein the list issuing unit prints service sort information and service promotion information as the supplementary information.

9. A non-transitory computer-readable storage medium having a program recorded thereon, the program causing a computer of a sales information processing device to perform:
printing a receipt based on sales information on a receipt sheet to issue the receipt;
printing a merchandise list in which supplementary information is added to correspond to merchandise names on the receipt sheet to issue the merchandise list, or printing a service list in which supplementary information is added to correspond to service names on the receipt sheet to issue the service list,
wherein the issuing of the receipt includes issuing the receipt as the merchandise list or the service list, without printing at least a part of the supplementary information.

10. The non-transitory computer-readable storage medium according to claim 9,
wherein the issuing of the merchandise list or the service list includes issuing the merchandise list or the service list such that the supplementary information is visually recognized as vertical writing.

11. The non-transitory computer-readable storage medium according to claim 9,
wherein the issuing of the merchandise list or the service list includes issuing the merchandise list or the service list including a message from a store.

12. The non-transitory computer-readable storage medium according to claim 9,
wherein the issuing of the merchandise list includes printing merchandise sort information and merchandise promotion information as the supplementary information, or
wherein the issuing of the service list includes printing service sort information and service promotion information as the supplementary information.

13. A non-transitory computer-readable storage medium having a program recorded thereon, the program causing a computer of a sales information processing device to perform:
printing a receipt based on sales information on a receipt sheet to issue the receipt; and
printing merchandise information to be provided as a merchandise list on the receipt sheet to issue the merchandise list, or printing service information to be provided as a service list on the receipt sheet to issue the service list,
wherein the issuing of the merchandise list or the service list includes printing supplementary information as a part of the merchandise information or the service information, the issuing of the receipt without printing the supplementary information when issuing the merchandise list or the service list.

14. The non-transitory computer-readable storage medium according to claim 13,
wherein the issuing of the merchandise list or the service list includes issuing the merchandise list or the service list such that the supplementary information is visually recognized as vertical writing.

15. The non-transitory computer-readable storage medium according to claim 13,
wherein the issuing of the merchandise list or the service list includes issuing the merchandise list or the service list including a message from a store.

16. The non-transitory computer-readable storage medium according to claim 13,
wherein the issuing of the merchandise list includes printing merchandise sort information and merchandise promotion information as the supplementary information, or
wherein the issuing of the service list includes printing service sort information and service promotion information as the supplementary information.
